# EUROPEAN PATENT APPLICATION

(11) **EP 2 390 009 A1**
(43) Date of publication of application: **30.11.2011**
(21) Application number: 10164451.6
(22) Date of filing: 31.05.2010
(51) Int. Cl.: B05B 11/00, B65D 83/14, A47K 5/12

(54) **Metering arrangement for dispensing metered quantities of liquid from a deformable container**

(71) Applicant: Scandinavian Amenities A/S, 2650 Hvidovre (DK)
(72) Inventor: Lolk, Søren, 8362, Hørning (DK)
(74) Representative: Holme Patent A/S

(57) **Abstract**

A metering arrangement is adapted for dispensing metered quantities of liquid from a container (1) via a lower outlet passage (8) of the container (1). The metering arrangement comprises a first valve (9), which is placed in the outlet passage (8) and is adapted to open in response to an excess pressure in the container (1) and to close in response to a negative pressure in the container (1). The metering arrangement comprises further a second valve (16,17) which is placed in the outlet passage (8) at a higher level than the first valve (9) and is adapted to close in response to opening of the first valve (9) and to open in response to a negative pressure, which liquid like e.g. soap can be dispensed in portions, which has exactly the same size each time a dispensing operation is carried out.

## Description

The present invention relates to a metering arrangement for dispensing metered quantities of a liquid from a container via an outlet passage of the container wherein the metering arrangement comprises a first valve which is placed in the outlet passage and is adapted to open in response to an excess pressure in the container and to close in response to a negative pressure in the container.

The invention also relates to a use of the metering arrangement for dispensing metered quantities of liquid from a container.

The term "excess pressure" is used herein for stating a pressure higher than the pressure of the atmosphere and the term "negative pressure" for stating a pressure equal to, similar to or smaller than the pressure of the atmosphere.

The liquid to be dispensed may e.g. be a viscous detergent such as soap or shampoo but can within the scope of the invention be any other liquid, such as e.g. a cream.

Dispensers are frequently used in public locations like e.g. lavatories and bathrooms for dispensing a specific amount or portion of liquid directly onto the hand of a user.

A dispenser consists basically of a container, which contains the liquid to be dispensed, and a housing for storing said container. The container may be of that kind which can be refilled when it is empty or it can be a disposable container, which is discarded when emptied.

The housing may be adapted to be mounted on a wall or to be placed upon a support, e.g. a table. Typically the housing involves a pump arrangement of some sort, which in use produces an excess pressure in the container for thereby expelling a portion of the liquid from the container.

The dispenser described in the European Patent Publication EP 1 317 383 consists of a housing for being mounted on a wall and a disposable container for being inserted in the housing via a front aperture. The container protrudes partly from the aperture, which is covered by a plate pivotally mounted on the housing. The container is slightly deformed when the plate is pivoted against the container, thereby ensuring that an excess pressure is generated in the container. In response to said excess pressure a portion of the liquid is expelled through a non-return valve of the container.

Said European Patent Publication EP 1 317 383 is incorporated herein by reference.

In order to keep the costs of the liquid dispensed over time to a minimum without compromising the results of the use of the liquid, it is important that the dispensing takes place in suitable portions, i.e. the portions must be neither be too large nor too small.

Many of the known dispensers are however not able to dispense the liquid with the required accuracy and moreover the dispensing operation doesn't stop immediately when the required portion of the liquid has been delivered, whereby spillage of liquid and contaminating of the surroundings unfortunately takes place.

Over the years great efforts have therefore been exercised for improving existing dispensers.

From the European Patent Application EP 1 084 669 is known a dispenser for dispensing e.g. soap in portions. This dispenser is equipped with a pump with a liquid chamber, which via an upper conduit with a ball valve is in fluid communication with the container of the dispenser and with the open air via a lower conduit with a non-return valve.

The liquid chamber has an elastic wall and by pressing upon this wall by means of e.g. a finger is an excess pressure generated in the liquid chamber whereby the upper conduit will be closed by the ball valve while the lower non-return valve simultaneously allows a portion of the liquid in the chamber to be expelled through the lower conduit in response to said excess pressure.

The size of the portions of liquid, which each time is dispensed, is depending on the size of the individual load on the chamber. Therefore, required accuracy of the dispensing cannot be obtained nor can the same amount be dispensed each time. The structure of the pump itself and the joining between the pump and the container is moreover complicated and costly.

The invention described in the Publication WO 2006/12368 A1 tries to solve the problem of inaccurate dosing of the liquid by means of a pump consisting of a resiliency flexible conduit with a ball valve which is mounted in the upper end of the conduit and is coupled to a container and a disc valve which is mounted in the lower end of the conduit and is equipped with a cruciform slot making the disc valve to function as a non-return valve.

When the pump is used a pressure is applied to the exterior of the flexible conduit so that the pressure in the flexible conduit is increased whereby the ball of the ball valve of the pump is raised and the liquid in the chamber of the ball valve flows into the conduit while at the same time the disc valve opens so that the liquid in the conduit is permitted to flow out of the conduit via the now opened disc valve.

The required accuracy of the size of the dispended portions of liquid can however not be obtained since the dosing also in this case is depending on the size of the individual pressure applied to the flexible conduit.

Also, spillage of liquid and contaminating of the surroundings cannot be fully avoided since the dispensing operation cannot stop immediately owing to the inertia in the liquid flowing downwards in the conduit during a dispensing operation.

The structure of the pump of the known dispenser is moreover complicated and costly and occupies much space on a wall or a table due to the length of the conduit acting as pump. The pump is furthermore difficult to operate by a user.

The above-mentioned disadvantages of the prior art arrangement for dispensing quantities of liquid from a container is according to the invention remedied by,

in a first aspect of the invention providing a metering arrangement for dispensing metered quantities of liquid of the kind mentioned in the opening paragraph, which has a simple and inexpensive structure,

in a second aspect of the invention providing a metering arrangement for dispensing metered quantities of liquid of the kind mentioned in the opening paragraph, which is adapted to dose portions of the liquid having exactly the same size each time,

in a third aspect of the invention providing a metering arrangement for dispensing metered quantities of liquid of the kind mentioned in the opening paragraph, which is easy to operate,

in a fourth aspect of the invention providing a metering arrangement for dispensing metered quantities of liquid of the kind mentioned in the opening paragraph, which can be operated without liquid spillage,

in a fifth aspect of the invention providing a metering arrangement for dispensing metered quantities of liquid of the kind mentioned in the opening paragraph, which can be operated without contaminating the surroundings,

in a sixth aspect of the invention providing a metering arrangement for dispensing metered quantities of liquid of the kind mentioned in the opening paragraph, which has a compact structure,

in a seventh aspect of the invention providing a metering arrangement for dispensing metered quantities of a viscous detergent such as soap or shampoo.

Other aspects of the invention will be apparent during the course of the following description.

The novel and unique features whereby these and further aspects are achieved are due to the fact that the metering arrangement also comprises a second valve which is placed in the outlet passage before the first valve and is adapted to close in response to opening of the first valve and to open in response to a negative pressure in the container.

When exercising a pressure upon the dispenser an excess pressure is generated in the liquid in the container whereby the first valve of the container opens in response to said excess pressure and a flow of liquid leaves the container through the now open first valve which in this case functions as a non-return valve.

This operation corresponds to the dispensing operation carried out by the previously mentioned European Patent Publication EP 1 317 383, but contrary to the dispenser of the present invention, said known dispenser is not equipped with any metering arrangement for exactly dosing the portions of liquid to be used.

Said metering is adventurously achieved by placing a second valve in the outlet passage of the container before the first valve. As said second valve is adapted to close in response to opening of the first valve and to open in response to a negative pressure in the container, a simple and reliable metering of the liquid is achieved according to the invention.

The metering arrangement of the invention thereby advantageously obtains a simple and inexpensive structure, which moreover is easy to operate.

For improving the known dispensers so they will be able to dose liquid in portions which each time have exactly the same size the second valve according to the invention, can have a lower valve seat and an upper valve body placed at a predetermined distance from the valve seat in the fully open state of the second valve.

The term "fully open state" is used herein for indicating the position of the second valve in which the distance between the valve seat and valve body is the largest possible.

The second valve is designed such that it will not close in response to a negative pressure in the container. However, the flow of liquid moving in the downwards direction in the container when the first valve opens will carry the valve body along, moving it towards the valve seat until the valve body arrives at the valve seat and closes the second valve and thereby the container.

A portion of liquid will be dispended through the open first valve during the time the valve body has used to travel from the fully open state to the fully closed state of the second valve.

Since the flow conditions and thereby the rate of which the valve body travels from the fully open state to the fully closed state, always is the same the dosed portions will have exactly the same size each time a dispensing operation takes place.

According to a preferred embodiment of the invention the distance from the valve seat, in which the valve body is placed in the fully open state of the second valve, can moreover be chosen specifically depending on the desired dosage, i.e. the distance can have such a size that the desired quantity of liquid has been expelled through the first valve during the traveling of the valve body from the fully open to the fully closed state of the second valve.

The excess pressure in the liquid in the container will according to the invention be turned into a negative pressure as soon as the pressure applied upon the container is stopped. That course the second valve to open and the first valve to close instantaneously so that spillage of liquid and contamination of the environment thereby advantageously are avoided.

However, the second valve needs to be brought back to its fully opened state before a new dispensing operation successfully can be carried out. That implies that the valve body needs to travel into the opposite direction of the closing direction of the second valve until the valve body arrives to that position in which the second valve again is in its fully opened state. In a preferred embodiment according to the invention can the valve body have a weight, which is smaller than the weight of that quantity of liquid, which is displaced by the valve body, whereby is obtained that advantage that the valve body automatically will be displaced upwards in the liquid in the container when the dispensing of liquid stops.

A very simple and inexpensive valve body can according to the invention be formed as a ball, which moreover advantageously can be hollow.

The valve body can in another embodiment according to the invention be a hollow cylinder-formed box with a lower face fitting to the upper face of the valve seat. By means of this structure the valve body can be give a length and/or dimension such that it is ensured that all dispensed portions of liquid exactly has that size which is desired.

A very simple construction can according to the invention be obtained if the metering arrangement comprises a spring with an elastic force acting upon the valve body of the second valve in the direction from a lower to an upper position of the valve body, i.e. the valve body is placed on top of a pressure spring, which is guiding the displacements of the valve body during a dispensing operation.

The metering arrangement can preferably comprise a guideway for guiding the displacements of the valve body during a dispensing operation and it is advantageously when the interior of the guideway is in liquid communication with the liquid in the container as this provide a very simple, reliable and inexpensive design of the second valve.

A safe and reliable guideway can according to the invention, have a tubular shape having a wall with through openings via which the liquid in the guideway communicates with the liquid in the remainder of the container.

The tubular guideway can moreover, according to the invention, be equipped with an upper bottom serving as an upper stop face for the valve body and defining thereby the distance, which the valve body has to travel in the guideway until it is seated on the valve seat.

The invention will be explained in greater details below, giving further advantages features and technical effect and describing an exemplary embodiment with reference to the drawing.
Fig. 1 shows, seen in section in a not activated state, a fragmentarily lateral view of a container with a metering arrangement according to the invention for dispensing a liquid,
Fig. 2 shows the same but with the metering arrangement in an activated state, and
Fig. 3 shows the same but with the metering arrangement in a closed state after that a dispensing operation has been carried out.

A container for dispensing a liquid is normally used in connection with a housing "not shown" which may be of that kind which is described in the previously mentioned European Patent Publication EP 1 317 383. The housing can however within the scope of the present invention be of any other suitable kind.

The invention is described below with the assumption that the metering arrangement according to the present invention is used for dispensing soap into the hands of a user. This assumption is not to be construed as limiting, and other liquids e.g. creams can also be administered or dispensed using the arrangement.

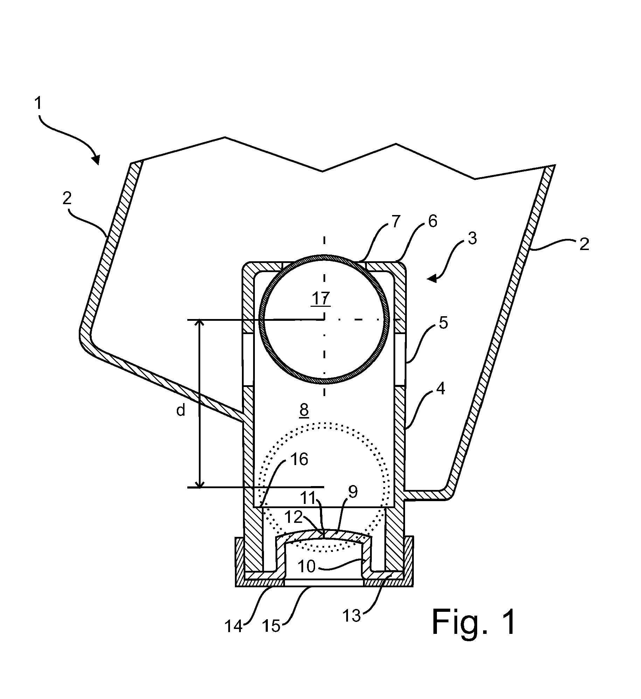

Fig. 1 - 3 only shows the lower part of a container 1. The container is intended to have a content of soap, which however is not seen in the figures.

The container 1 has an elastic wall 2, which is deformed when being acted upon by an external force "not shown", whereby an excess pressure is generated in the soap in the container.

The elastic wall is restored to its original state when removing the force whereby a negative pressure is generated in the container.

The container is formed with a tubular casing 3 with a wall 4 with first through openings 5. At the top of the casing is formed a cross wall 6 with a second through opening 7.

The interior 8 of the casing 3 is in communication with the remainder of the container via the through openings 5 and 7 in the walls 4 and 6, respectively.

A first valve 9 is placed at the foot of the casing. Said first valve can within the scope of the invention be of any suitable kind, as long as it prevents backflow of fluid into the container, thereby ensuring that liquid can be dispensed without compromising the function of the arrangement according to the invention.

In the present embodiment the first valve is a non-return valve 9 formed as an inverted cup 9 with a wall 10. The wall 10 of the inverted cup 9 is made of an elastic material and is at the top equipped with a through cut 11 delimited by two opposite lips 12.

In this case the inverted cup only has one through cut 11, but within the scope of the invention the inverted cup can have more through cuts, which by way of example moreover can form a cross with each other.

The inverted cup 9 has in this case a flange 13 for by means of a screw or press cap 14 tightly connecting the inverted cup to the casing 3.

A through opening 15 is formed in the cap 14 for allowing the soap to leave the soap container during a dispensing operation.

Alternatively the non-return valve is the above mentioned cap itself made of an elastic material and is like the above mentioned inverted cup equipped with a through cut delimited by two opposite lips. The through cut of this embodiment serves directly as exit opening for the soap to be dispensed and the lips, which are delimiting the through cut, closes after a dispensing has been carried out effectively sealing the exit opening.

As a third alternative of a non-return valve this can be an elastic disc, which are attached to the casing 3 and is equipped with at least one through cut.

A second valve 16,17 is placed in the tubular casing 3 of the soap container 1 above the non-return valve.

This valve 16,17 consists of a valve seat 16 formed on the inner side of the wall 4 of the casing 3 and a valve body 17, which is placed in the casing in a displaceable fashion.

The valve body is in this case a hollow ball 17, which has a weight smaller than the soap displaced by the ball so that the ball automatically will go up in the soap when it is not affected by other forces.

Other configurations of the valve body of the second valve can however within the scope of the invention be contemplated.

The hollow ball 17 of the second valve 16,17 is adapted to be displaced between an upper and a lower position, respectively in the casing 3 during a dispensing operation, whereby the casing functions as a guideway for the ball. The upper position of the ball 17 is determined by the cross wall 6 of the casing 3 and the lower position by the valve seat 16.

Fig. 1 shows the ball 17 in its upper position where the second valve 16,17 is in its fully open state. Fig. 1 also shows in dotted line the ball in its lower position where the second valve 16,17 is in its fully closed state. During a dispensing operation the ball 17 is thus traveling the well-defined fixed distance d.

When the dispenser is not in use the non-return valve 9 is closed while the second valve 16,17 is fully open. Due to the fact that the density of the ball is lesser than the density of the soap the hollow ball 17, as shown in fig. 1, is placed in its upper position where the ball is abutting the cross wall 6 of the casing 3 closing the second valve. No dispensing takes place.

When a user wants a dosage of soap, a user by means of e.g. a finger applies an outer pressure to the elastic wall 2 of the soap container 1.

An excess pressure is thereby generated in the soap in the container whereby the non-return valve 9 opens in response to said excess pressure and soap is expelled through the now open non-return valve.

This implies that soap in the container 1 is flowing into the tubular casing 3 via the through openings 5 and 7, which are formed in the wall 4 and 6, respectively, of the casing 3, and that the soap in the casing is flowing downwards against the non-return valve 9 and out of the non-return valve.

The hollow ball 17 in the casing 3 acts however as a flow resistance in the soap current which therefore will load the ball with a reaction force corresponding to said flow resistance. Said reaction force is displacing the hollow ball 17 into the direction of the valve seat 16 of the second valve 16, 17.

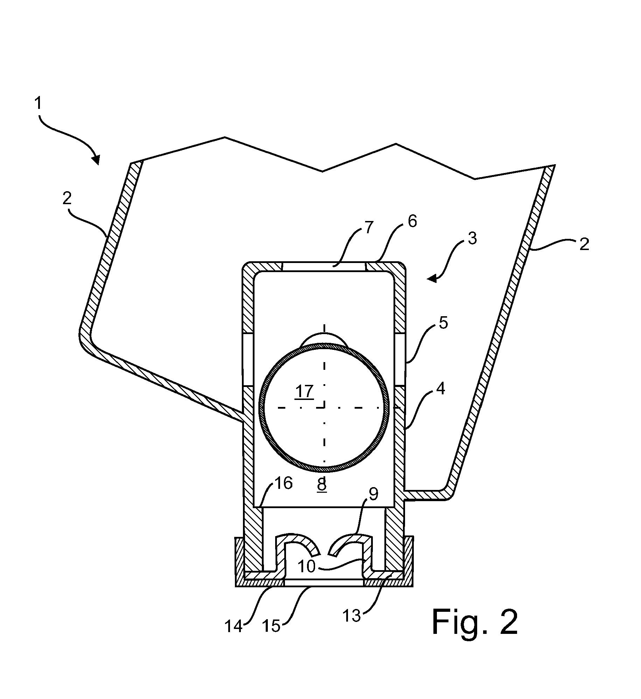

The hollow ball 17 has in fig. 2 been displaced to a position between its upper and lower position while soap are flowed out of the open non-return valve.

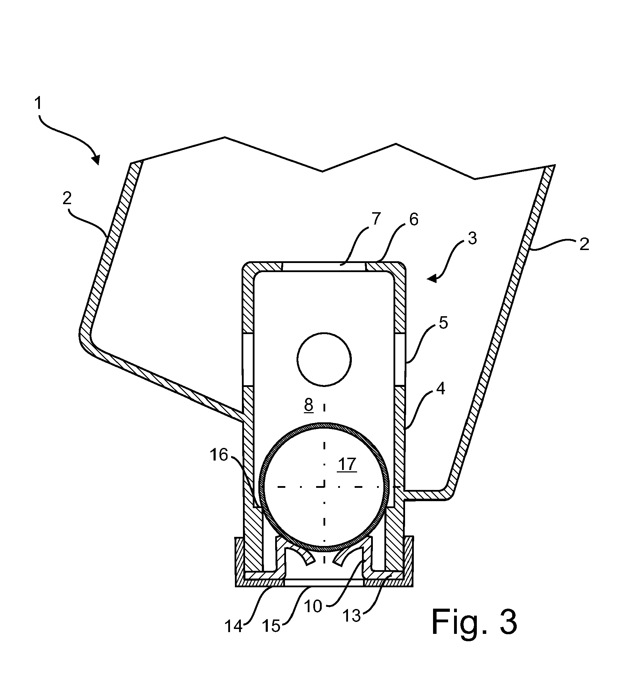

In fig. 3 the hollow ball 17 has been displaced to its lower position where the second valve is fully closed and the flow of soap through the non-return valve 9 has been brought to an end. The dispensing of soap is completed.

The traveling of the hollow ball 17 from its upper to its lower position takes a specific period time during which a portion of soap is expelled through the non-return valve.

Said traveling time of the hollow ball 17 is exactly the same each time a portion of soap is dispensed since the distance d, which the hollow ball has to travel from its upper to its lower position during a dispensing operation, is a fixed distance.

The portions of dispensed soap will therefore also have exactly the same size each time a dispensing operation takes place.

The size of each portion of soap is depending upon the length of the distance d between the upper and lower position of the hollow ball 17. A large portion can therefore be achieved when the distance d is large and a small portion when the distance d is small.

A desired size of the portions of soap to be dispensed thus can be achieved by simply imparting the distance d between the upper and lower position of the hollow ball 17 a corresponding length.

Portions of soap of a size of 4 ml is conventionally used and such portions is dispensed in about 1 sec. by means of e.g. a dispenser of that kind which is known from the previously mentioned European Patent Publication EP 1 317 383.

The dispenser is activated by pressing upon the soap container by means of e.g. a finger whereby an excess pressure in the soap container is build up.

The user will typically maintain said pressure on the soap container while a portion of soap is dispensed, that may be in 1 sec., and stop the pressure upon the soap container when experiencing that no more soap is expelled from the dispenser.

The down going flow of soap in the soap container is in this stage of the dispensing operation ceased and the excess pressure in the soap container has been replaced by a negative pressure.

Due to the fact that the density of the hollow ball 17 is lesser than the density of the soap is the ball now leaving its lower position on the valve seat 16 of the second valve 16,17 which thereby opens while the non-return valve 9 simultaneously closes so that the soap still is prevented from leaving the container and spillage of soap and contamination of the environment thereby effectively is avoided.

The hollow ball 17 will, after having leaved its lower position, continue to travel upwards until the ball meets the cross wall 6 of the casing 3.

The dispenser now is back to its original position ready for a new dispensing operation.

Since the arrangment according to the invention are a relatively small and intended for use with a single hand, it can used equally well for both at home and in the public domain.

Modifications and combinations of the above principles and designs are foreseen within the scope of the present invention.

## Claims

1. A metering arrangement for dispensing metered quantities of a liquid from a container (1) via an outlet passage (8) of the container (1) wherein the metering arrangement comprises a first valve (9) which is placed in the outlet passage (8) and is adapted to open in response to an excess pressure in the container (1) and to close in response to a negative pressure in the container (1), **characterized in that** the metering arrangement further comprises a second valve (16,17) which is placed in the outlet passage (8) before the first valve (9) and is adapted to close in response to opening of the first valve (9) and to open in response to a negative pressure in the container (1).

2. A metering arrangement according to claim 1, **characterized in that** the second valve (16,17) consists of a lower valve seat (16) and an upper valve body (17) which is placed at a distance from the valve seat (16) in a fully open state of the second valve (16,17).

3. A metering arrangement according to claim 2, **characterized in that** the distance from the valve seat (16) in which the valve body (17) is placed in the fully open state of the second valve (16,17) is chosen to have such a size that the desired quantity of liquid is expelled through the first valve (9) during traveling of the valve body (17) from the fully open state to a closed state of the second valve (16,17).

4. A metering arrangement according to claim 2 or 3, **characterized in that** the weight of the valve body (17) of the second valve (16,17) is smaller than the weight of the quantity of liquid which is displaced by the valve body (17).

5. A metering arrangement according to claim 4, **characterized in that** the valve body (17) of the second valve (16,17) is a ball (17).

6. A metering arrangement according to claim 5, **characterized in that** the ball (17) of the second valve (16,17) is hollow.

7. A metering arrangement according to claim 2, 3 or 4, **characterized in that** the valve body (17) is a hollow cylinder-formed box with a lower face fitting to the upper face of the valve seat (16).

8. A metering arrangement according to any of the claims 2 - 7, **characterized in that** the metering arrangement comprises a spring with an elastic force acting upon the valve body (17) of the second valve (16,17) in the direction from a lower to an upper position of the valve body (17).

9. A metering arrangement according to claim 2 - 7, **characterized in that** the metering arrangement comprises a guideway (3) for guiding the displacements of the valve body (17) during a dispensing operation.

10. A metering arrangement according to claim 9, **characterized in that** the interior of the guideway (3) is in liquid communication with the liquid in the container (1).

11. A metering arrangement according to claim 9 or 10, **characterized in that** the guideway (3) is formed with a stop face for determine the upper position of the valve body (17).

12. A metering arrangement according to claim 11, **characterized in that** the stop face for the valve body (17) is the underside of an upper bottom (6) of the guideway (3).

13. A metering arrangement according to any of the claims 9-12, **characterized in that** the guideway (3) is mainly tubular and that at least one opening (5) is formed in the wall (4) of the tubular guideway (3).

14. A metering arrangement according to any of the claims 9-13, **characterized in that** a through opening (7) is formed in the upper bottom (6) of the tubular guideway (3).

15. Use of a metering arrangement according to any of the claims 1 - 14 for dispensing a viscous liquid like soap, shampoo and other kinds of detergents from a container (1).
